# EUROPEAN PATENT APPLICATION

(11) **EP 1 669 333 A1**
(43) Date of publication of application: **14.06.2006**
(21) Application number: 04773682.2
(22) Date of filing: 01.10.2004
(51) Int. Cl.: C04B 35/10, H01T 13/38

(54) **ALUMINOUS CERAMIC COMPOSITION AND SPARK PLUG INCLUDING THE SAME**

(30) Priority: 03.10.2003 JP 2003345707
(71) Applicant: DENSO CORPORATION, Kariya-city, Aichi-pref., 448-8661 (JP)
(72) Inventor: OGATA, Itsuhei, Nishio-shi Aichi 445-0012 (JP); SUZUKI, Hirofumi c/o DENSO CORPORATION, Kariya-shi -city Aichi 448-8661 (JP); AOI, Yasuki c/o DENSO CORPORATION, Kariya-shi Aichi 448-8661 (JP)
(74) Representative: Leson, Thomas Johannes Alois
(86) International application number: PCT/JP2004/014880
(87) International publication number: WO 2005/033041

(57) **Abstract**

An alumina-based ceramic composition comprising a composite sintered body of alumina as a main component and a composition of at least one element selected from Al, Si, Mg and rare earth elements, wherein an amount of the composition of at least one element selected from Al, Si, Mg and the rare earth elements is not greater than 5 parts by weight on the basis of 100 parts by weight of alumina as the main component, and a spark plug using this alumina-based ceramic composition for an insulator.

## Description

### TECHNICAL FIELD

The present invention relates to an alumina-based ceramic composition, as a sintered body, containing alumina as a main component.

### BACKGROUND ART

An alumina-based composition has a good insulation property and a high electric strength or withstand voltage property and is particularly effective when it is used as an insulating material in a spark plug of an internal combustion engine of a car, as an engine component, and as an IC substrate.

A SiO₂-MgO-CaO-based alumina sintered body containing alumina (Al₂O₃) as its main component is known as such an alumina-based ceramic composition. (See, Japanese Patent No. 2,564,842, for example). This composition is extremely stable both thermally and chemically, is excellent in mechanical strength and has been widely used as an electrical insulating material in spark plugs for internal combustion engines, and so forth.

### DISCLOSURE OF THE INVENTION

However, sintering of such an alumina-based ceramic composition is done while sintering assistants, such as magnesium oxide (MgO), calcium oxide (CaO), silicon oxide (SiO₂), are added to improve sintering property. As, in this three component system, a sintering assistant exists as a low melting vitreous phase in an alumina grain boundary after sintering, there is a limit to improve a high withstand voltage property. In addition, recently, the area of intake and exhaust valves applied in a combustion engine has a tendency of being increased, because, in internal combustion engines used for cars and others, the output is increased and the size of the engines is reduced.

Therefore, the size of the spark plug itself for igniting an air-fuel mixture must be reduced (to obtain a smaller diameter) and, along with this requirement, the thickness of an insulator between a center electrode and a fitting metal in the spark plug must become small, too.

Further, the temperature inside the combustion engine tends to rise, owing to supercharger means such as turbo charger, and higher heat resistance has been required for alumina ceramic compositions used as an insulating material of the spark plug. Therefore, an insulating material more excellent in withstand voltage characteristics has been required for the spark plugs.

The present invention has been completed in view of the circumstances described above and aims at providing a novel alumina-based ceramic composition, more excellent in withstand voltage characteristics, and a spark plug using such an alumina-based ceramic composition.

To accomplish this object, the inventors of this application have carried out inventive studies, as described below.

Because Al₂O₃ used as the main component of the alumina-based ceramic composition has an extremely high melting point (about 2,050°C), it is effective to use an increased amount of the Al₂O₃ content to improve the withstand voltage characteristics. However, when the Al₂O₃ content is increased excessively, the substantial formation of a dense product based on a solid phase sintering mechanism cannot be carried out at a sintering temperature of about 1,450 to 1,600°C that can ordinarily be employed. In other words, the strength of the alumina-based ceramic composition drops and the composition becomes impractical.

Therefore, though sintering assistants such as MgO and CaO capable of forming a liquid phase of a low melting point by the eutectic reaction with Al₂O₃ during sintering are generally added so that the sintered body can be rendered even at a relatively low sintering temperature, the liquid phase of the low melting point becomes a vitreous phase after sintering. This glass phase has a low withstand voltage.

Therefore, the inventors have conducted experiments and examined the additives to be added to alumina as the main component of the alumina-based ceramic composition.

According to the results, it has been found that the withstand voltage can be improved when an alumina-based ceramic composition is constituted by a composite sintered body of alumina as the main component and a composition of at least one element selected from Al, Si and Mg.

The inventors have further continued their studies of materials and compositions of the alumina-based ceramic composition comprising a composite sintered body of alumina as the main component and a composition of at least one element selected from Al, Si and Mg, and have conducted optimization. The present invention has been created experimentally on the basis of these examination results.

According to one aspect of the present invention, there is provided an alumina-based ceramic composition containing alumina as its main component and comprising a composite sintered body of alumina as the main component and a composition of at least one element selected from Al, Si, Mg and rare earth elements, wherein an amount of the composition of at least one element selected from Al, Si, Mg and the rare earth elements is not greater than 5 parts by weight on the basis of 100 parts by weight of alumina as the main component.

The present invention can provide a novel alumina-based ceramic composition more excellent in withstand voltage characteristics.

The reason is presumably because the composition of at least one element selected from Al, Si, Mg and the rare earth elements forms a composition having higher withstand voltage characteristics in the grain boundary of the alumina particles. This will be further described.

When X-ray diffraction is carried out in practice for the alumina-based ceramic composition of the present invention, both alumina as the main component and the composition of at least one element elected from Al, Si, Mg and the rare earth element exhibit the crystal phase.

The reason why the alumina-based ceramic composition of the present invention has the excellent withstand voltage characteristics is presumably because the composition of at least one element selected from Al, Si, Mg and the rare earth elements promotes sintering of alumina, particularly fluidity of the composition during sintering.

As a result, emission of the holes from the sintered body is promoted and the holes are eliminated from the crystal structure. Thus, it is considered that because the holes, that can otherwise cause dielectric breakdown when a high voltage is applied, do not exist, the composition presumably exhibits the excellent withstand voltage.

As a matter of fact, it has been confirmed through electron microscopic observation that the holes hardly exist in the alumina-based ceramic composition according to the invention in comparison with the compositions of the prior art.

When the crystal structure of the alumina-based ceramic composition of the present invention is examined in detail, it is found that the composition of at least one element selected from Al, Si, Mg and the rare earth elements described above forms an oxide phase having a high melting point in the alumina grain boundary. It is also found that this oxide phase having a high melting point is formed in such a manner as to encompass the alumina of the main component.

This oxide phase having a high melting point generally has higher insulating property than the vitreous phase consisting of the sintering assistants of the prior art and it cannot operate as a conduction path at the time of dielectric breakdown when a high voltage is applied thereto. It is therefore believed that, in the alumina-based ceramic composition according to the prior art, the withstand voltage of dielectric breakdown can be improved by cutting off the conduction paths.

It is believed from above that, in the present invention, the composition of at least one element, selected from Al, Si, Mg and the rare earth elements as the additives, promotes sintering of alumina, and a composition having high withstand voltage characteristics is appropriately formed in the grain boundary among the alumina particles as the main component while minimizing the occurrence of holes, with the result that higher withstand voltage characteristics can be provided in practice.

According to one preferred embodiment, the rare earth element described above in the alumina-based ceramic composition of the invention is at least one element selected from the element group consisting of La Ce, Pr, Nd, Sm, Eu, Gd, Tb, Dy, Ho, Er, Tm, Yb, Lu and Y.

According to another preferred embodiment, the composition of the rare earth elements described above in the alumina-based ceramic composition of the invention is at least one kind of composition selected from La₂O₃, CeO₂, Ce₂O₃, Pr₂O₃, Pr₆O₁₁, Nd₂O₃, Sm₂O₃, Eu₂O₃, Gd₂O₃, Tb₂O₃, Tb₄O₇, Dy₂O₃, Ho₂O₃, Er₂O₃, Tm₂O₃, Yb₂O₃, Lu₂O₃ and Y₂O₃.

In these preferred embodiments, when the rare earth elements and the compositions of the rare earth elements are such as those described above in the alumina-based ceramic composition of the invention, the composition having the high withstand voltage characteristics can be formed more appropriately in such a manner as to encompass alumina as the main component in the alumina grain boundary.

According to the second aspect of the present invention, there is provided an alumina-based ceramic composition containing alumina as its main component and comprising a composite sintered body of alumina as the main component and at least one composition selected from Al and Y, wherein an amount of at least one composition selected from Al and Y is not greater than 5 parts by weight on the basis of 100 parts by weight of alumina as the main component.

The invention can provide a novel alumina-based ceramic composition more excellent in withstand voltage characteristics.

The reason is presumably because the composition of at least one element selected from Al and Y forms a composition having higher withstand voltage characteristics in the grain boundary among the alumina particles.

In the alumina-based ceramic composition of the invention, the function of the composition of at least one element selected from Al and Y is the same as the function of the composition of at least one kind of element selected from Al, Si, Mg and the rare earth element described in the first aspect of the present invention, and this function has been confirmed experimentally in the same way as the alumina-based ceramic composition of the invention described above.

In other words, the composition of at least one element selected from Al and Y as the additive promotes sintering of alumina and a composition having high withstand voltage is appropriately formed in the grain boundary among the alumina particles as the main component. Therefore, a more excellent withstand voltage can be provided in practice.

According to one preferred embodiment, the composition of at least one element selected from Al and Y is at least one composition selected from Al₂SiO₅, MgAl₂O₄, Al₂O₃·TiO₂, 3Al₂O₃·2SiO₂, YAlO₃, Y₃Al₅O₁₂, Y₂SiO₅ and Al₂O₃.

In this preferred embodiment, when the composition of at least one element selected from Al and Y has the composition described above in the alumina-based ceramic composition of the invention, the composition having higher withstand voltage characteristics can be formed more appropriately in such a form as to encompass alumina as the main component in the alumina grain boundary.

According to the third aspect of the present invention, there is provided an alumina-based ceramic composition containing alumina as its main component and comprising a composite sintered body of alumina as the main component and a perovskite type oxide ReAlO₃ as a composite oxide of a rare earth element Re and Al, wherein an amount of the perovskite type oxide ReAlO₃ is not greater than 5 parts by weight on the basis of 100 parts by weight of alumina as the main component.

The invention can provide a novel alumina-based ceramic composition more excellent in withstand voltage characteristics.

The reason is presumably because the perovskite type oxide ReAlO₃ forms a composition having higher withstand voltage characteristics in the grain boundary among the alumina particles.

In the alumina-based ceramic composition of the invention, the function of the perovskite type oxide ReAlO₃ is the same as the function of the composition of at least one element selected from Al, Si, Mg and the rare earth element described in the first aspect, and this function has been confirmed experimentally in the same way as the alumina-based ceramic composition of the invention described above.

In other words, the perovskite type oxide ReAlO₃ as the additive promotes sintering of alumina and a composition having high withstand voltage is appropriately formed in the grain boundary among the alumina particles as the main component. Therefore, more excellent withstand voltage can be provided in practice.

In still another aspect, the present invention resides in those in which the composite sintered body in the alumina-based ceramic composition described above is constituted by a composition of at least one element selected from Al and Y in addition to alumina as the main component and the perovskite type oxide ReAlO₃, and an amount in total of the perovskite type oxide ReAlO₃ and at least one element selected from Al and Y is not greater than 5 parts by weight on the basis of 100 parts by weight of alumina as the main component.

The present invention substantially comprises the combination of the invention described as the third aspect with the invention described as the second aspect.

According to this invention, better withstand voltage characteristics can be accomplished because the perovskite type oxide ReAlO₃ and the composition of at least one element selected from Al and Y can exhibit the function of the additives described above.

According to another preferred embodiment, the alumina-based ceramic composition is characterized in that the composition of at least one element selected from Al and Y is at least one composition selected from Al₂SiO₅, MgAl₂O₄, Al₂O₃·TiO₂, 3Al₂O₃·2SiO₂, YAlO₃, Y₃Al₅O₁₂, Y₂SiO₅ and Al₂O₃.

In this preferred embodiment, when the composition of at least one element selected from Al and Y is constituted as described above in the alumina-based ceramic composition of the invention, a composition having higher withstand voltage characteristics can be formed more appropriately in such a form as to encompass alumina as the main component in the alumina grain boundary.

According to still another preferred embodiment, the perovskite type oxide ReAlO₃ in the alumina-based ceramic composition of the invention is at least one composition selected from LaAlO₃, CeAlO₃, PrAlO₃, NdAlO₃, SmAlO₃, EuAlO₃, GdAlO₃, TbAlO₃, DyAlO₃, HoAlO₃, ErAlO₃, TmAlO₃, YbAlO₃, LuAlO₃ and YAlO₃.

In this preferred embodiment, when the perovskite type oxide ReAlO₃ has the composition described above in the alumina-based ceramic composition of the invention, a composition having higher withstand voltage characteristics can be formed more appropriately in such a form as to encompass alumina as the main component in the alumina grain boundary.

According to still another embodiment, in the alumina-based ceramic composition of the present invention, the mean grain diameter of the composite sintered body is not greater than 1.0 µm.

When the mean grain diameter of the composite sintered body is as small as 1.0 µm or below, the holes hardly occur in the alumina-based ceramic composition and sintering shrinkage is improved, so that a compact insulator can be accomplished. As a result, the composition exhibits excellent withstand voltage characteristics because the holes, that can otherwise operate as the starting point of dielectric breakdown when a high voltage is applied, do not exist.

According to the fourth aspect of the present invention, there is provided a spark plug using as an insulating material the alumina-based ceramic composition that is described above and will be described hereinafter in detail.

According to this invention, there is provided a spark plug using a novel alumina-based ceramic composition more excellent in withstand voltage characteristics. In other words, there is provided a spark plug exhibits excellent withstand voltage characteristics.

According to the fifth aspect of the present invention, there is provided a spark plug comprising a fitting metal (10) having a fitting screw portion (12) formed on an outer periphery thereof, an insulator (20) fixed inside the fitting metal (10), a center electrode (30) fixed inside the insulator (20) in such a manner that a distal end portion (31) thereof protrudes from the insulator (20) and a ground electrode (40) fixed to the fitting metal (10) and opposing the distal end portion (31) of the center electrode (30) through a spark discharge gap (50), wherein the insulator (20) is constituted from the alumina-based ceramic composition of the invention that is described above and will be hereinafter described in detail, and a nominal diameter of the fitting screw portion (12) is not greater than M10.

The invention described above can provide a spark plug that uses the novel alumina-based ceramic composition having higher withstand voltage characteristics and is made compact to a nominal diameter of the fitting screw portion (12) of not greater than M10.

Note that in the above descriptions, the reference numeral inside a parenthesis of each means of the spark plug is an example representing the correspondence relation with concrete means described in the following embodiments.

### BRIEF DESCRIPTION OF THE DRAWING

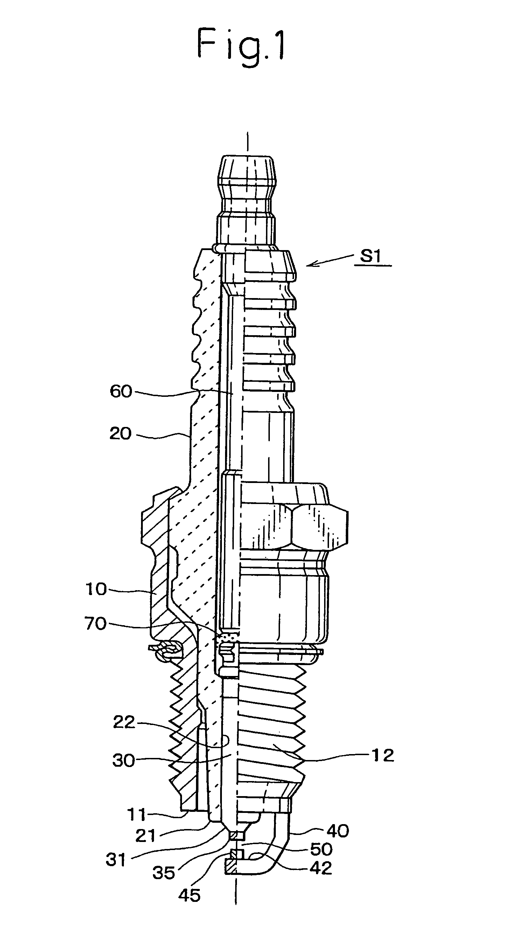

Fig. 1 is a semi-sectional view showing an overall construction of a spark plug according to one embodiment of the invention.

### BEST MODE FOR CARRYING OUT THE INVENTION

Hereinafter, embodiments of the present invention will be described with reference to Fig. 1.

### [Construction of Spark Plug]

A spark plug S1 shown in Fig. 1 is applied to a spark plug of a car engine, etc, and is fitted and fixed into a screw hole formed in an engine head (not shown) defining a combustion chamber of the engine.

The spark plug S1 has a cylindrical fitting metal 10 made of a steel material having conductivity (low carbon steel, for example), and a fitting screw portion 12 for fitting the fitting metal 10 to an engine block, not shown, is formed on an outer peripheral surface of the fitting metal 10.

In this embodiment, a nominal diameter of this fitting screw portion 12 is not greater than 10 mm. In other words, the fitting screw portion 12 in this embodiment is not greater than M10 stipulated by JIS (Japanese Industrial Standards).

An insulator 20 made of an alumina-based ceramic composition is accommodated and fixed inside the fitting metal 10 and a distal end portion 21 of this insulator 20 protrudes from a distal end portion 11 of the fitting metal 10.

A center electrode 30 is fixed to a shaft hole 22 of the insulator 20 and the center electrode 30 is therefore held while insulated from the fitting metal 10.

The center electrode 30 has a cylindrical shape an inner material of which is made of a metal material having high heat conductivity such as Cu and an outer material of which is made of a metal material excellent in both heat resistance and corrosion resistance such as a Ni base alloy.

As shown in Fig. 1, the center electrode 30 is arranged in such a manner that its distal end portion 31 protrudes from the distal end portion 21 of the insulator 20. In this way, the center electrode 30 is accommodated in the fitting metal 10 while its distal end portion 31 protrudes.

On the other hand, a ground electrode 40 has a cylindrical shape formed of a Ni base alloy containing Ni as a main component, for example.

In this embodiment, the ground electrode 40 has a prismatic shape one of the ends of which is fixed by welding, etc, to the distal end portion 11 of the fitting metal 10, an intermediate part of which is bent into a substantial L-shape and which opposes the distal end portion 31 of the center electrode 30 on the side surface 42 on the other end side through a spark discharge gap 50.

A noble or precious metal chip 35 is so disposed at the distal end portion 31 of the center electrode 30 as to protrude from this distal end portion 31. A noble metal chip 45 is so formed on the side surface 42 of the ground electrode 40 as to protrude from the side surface 42.

These noble metal chips 35 and 45 are formed of an Ir (iridium) alloy or a Pt (platinum) alloy and bonded to electrode bases 30 and 40 by laser welding, resistance welding, or the like.

The spark discharge gap 50 is a gap between the distal end surfaces of both noble metal chips 35 and 45. The size of this spark discharge gap 50 is not limited and can be about 1 mm, for example.

A take-out stem 60 of the center electrode 30 is disposed in the shaft hole 22 of the insulator at a portion of the insulator 20 on the opposite side to the distal end portion 21. This stem 60 has a rod-like shape and conductivity and is electrically connected to the center electrode 30 through a conductive glass seal 70 inside the shaft hole 22 of the insulator 20.

Here, the insulator 20 is formed of the alumina ceramic composition containing alumina as the main component, as described above. This embodiment uses a specific composition for the alumina-based ceramic composition constituting this insulator 20. The alumina-based ceramic composition of this embodiment will be explained next.

### [Alumina-based Ceramic Composition of this Embodiment]

The alumina-based ceramic composition of this embodiment comprises alumina as the main component and a composition of at least one element selected from Al (aluminum), Si (silicon), Mg (magnesium) and rare earth elements. This composition will be hereinafter called a "first alumina-based ceramic composition".

The term "composition of at least one element selected from Al, Si, Mg and rare earth elements" means a composition of Al, a composition of Si, a composition of Mg and a composition of the rare earth elements or may be one composition that contains elements selected from Al, Si, Mg and the rare earth elements as a mixture.

The term "rare earth element" means those elements that belong to the Group 3 of the Periodic Table and include Sc (scandium), Y (yttrium) and lanthanoids of the atomic numbers 57 to 71.

More concretely, the rare earth elements suitably used for the first alumina-based ceramic composition includes La (lanthanum), Ce (cerium), Pr (praseodymium), Nd (neodymium), Sm (samarium), Eu (europium), Gd (gadolinium), Tb (terbium), Dy (dysprosium), Ho (holmium), Er (erbium), Tm (thulium), Yb (ytterbium), Lu (lutetium) and Y.

The composition of the rare earth element suitably used for the first alumina-based ceramic composition is at least one composition selected from La₂O₃, CeO₂, Ce₂O₃, Pr₂O₃, Pr₆O₁₁, Nd₂O₃, Sm₂O₃, Eu₂O₃, Gd₂O₃, Tb₂O₃, Tb₄O₇, Dy₂O₃, Ho₂O₃, Er₂O₃, Tm₂O₃, Yb₂O₃, Lu₂O₃ and Y₂O₃.

In the first alumina-based ceramic composition, the amount of the composition of at least one element selected from Al, Si, Mg and the rare earth elements is not greater than 5 parts by weight on the basis of 100 parts by weight of alumina as the main component. In other words, the weight proportion of the composition of at least one element selected from Al, Si, Mg and the rare earth elements is not greater than 5/100.

Further, as the alumina-based ceramic composition of this embodiment, it is possible to use an alumina-based ceramic composition consisting of a composite sintered body of alumina as the main component and a composition of at least one element selected from Al and Y, wherein the amount of the composition of at least one element selected from Al and Y is not greater than 5 parts by weight on the basis of 100 parts by weight of alumina as the main component. This composition will be hereinafter called a "second alumina-based ceramic composition".

Here, the term "composition of at least one element selected from Al and Y" means a composition containing Al, a composition containing Y or a composition containing both Al and Y.

As the composition of at least one element selected from Al and Y suitably used for this second alumina-based ceramic composition, it is possible to use at least one composition selected from Al₂SiO₅, MgAl₂O₄, Al₂O₃·TiO₂, 3Al₂O₃·2SiO₂, YAlO₃, Y₃Al₅O₁₂, Y₂SiO₅ and Al₂O₃.

Furthermore, as the alumina-based ceramic composition of this embodiment, it is possible to use a composite sintered body of alumina as the main component and a perovskite type oxide ReAlO₃ as a composite oxide of the rare earth element Re and Al, wherein the amount of the perovskite type oxide ReAlO₃ is not greater than 5 parts by weight on the basis of 100 parts by weight of alumina as the main component. This composition will be hereinafter called a "third alumina-based ceramic composition".

As the perovskite type oxide ReAlO₃ suitably used for this third alumina-based ceramic composition, it is possible to use at least one composition selected from LaAlO₃, CeAlO₃, PrAlO₃, NdAlO₃, SmAlO₃, EuAlO₃, GdAlO₃, TbAlO₃, DyAlO₃, HoAlO₃, ErAlO₃, TmAlO₃, YbAlO₃, LuAlO₃ and YAlO₃.

In addition, as the alumina-based ceramic composition of this embodiment, it is further possible to use a composite sintered body of alumina as the main component, the perovskite type oxide ReAlO₃ and a composition of at least one element selected from Al and Y, wherein the amount in total of the perovskite type oxide ReAlO₃ and the composition of at least one element selected from Al and Y is not greater than 5 parts by weight on the basis of 100 parts by weight of alumina as the main component. This composition will be hereinafter called a "fourth alumina-based ceramic composition".

In the first to fourth alumina-based ceramic compositions described above, the composition of at least one element selected from Al, Si, Mg and the rare earth elements, the composition of at least one element selected from Al and Y and the perovskite type oxide ReAlO₃ are respectively additives that are added to alumina as the main component in the composite sintered body constituting the alumina ceramic composition. These additives will be hereinafter called "additive compositions".

In the first to fourth alumina-based ceramic compositions described above, the amount of the additive composition is not greater than 5 parts by weight on the basis of 100 parts by weight of alumina as the main component. Specifically, the additive composition can be added in an amount of about 0.5 to 5 parts by weight.

These alumina-based ceramic compositions can provide a novel alumina-based ceramic composition more excellent in the withstand voltage characteristics.

The reason is presumably because the additive compositions form a composition having high withstand voltage characteristics in the grain boundary of the alumina particles as the main component in the first to fourth alumina-based ceramic compositions. This will be further described in detail.

When X-ray diffraction is conducted, in practice, for each of the first to fourth alumina-based ceramic compositions, alumina as the main component and the additive compositions respectively exhibit the crystal phases.

The reason why the first to fourth alumina-based ceramic compositions have the excellent withstand voltage characteristics is presumably because the additive compositions promote sintering of alumina and particularly improve fluidity of the additive compositions during sintering.

As a result, emission of holes from the sintered body is promoted and the holes are eliminated from the crystal structure. Because the holes, that can otherwise operate as the starting point of dielectric breakdown when a high voltage is applied, do not exist, the composition exhibits excellent withstand voltage characteristics.

As a matter of fact, it has been confirmed through electron microscopic observation that the holes hardly exist in the first to fourth alumina-based ceramic compositions in comparison with the compositions of the prior art.

When the crystal structure of each of the first to fourth alumina-based ceramic compositions is examined in detail, it has been found that the additive composition forms the oxide phase having a high melting point in the grain boundary of alumina. It has also been found that this oxide phase having a high melting point is formed in such a form as to encompass alumina as the main component.

The oxide phase having a high melting point has higher insulating property than a vitreous phase consisting of sintering assistants of the prior art and does not operate as a conduction path at the time of dielectric breakdown even when a high voltage is applied thereto. It is therefore believed that in the first to fourth alumina-based ceramic compositions, the withstand voltage of dielectric breakdown is improved by cutting off the conduction paths.

It can be seen from above that, in the first to fourth alumina-based ceramic compositions of this embodiment, the additive composition promotes sintering of alumina and the composition having the high withstand voltage characteristics is appropriately formed in the grain boundary among the alumina particles as the main component while minimizing the occurrence of the holes, and that a more excellent withstand voltage characteristics can thus be achieved in practice.

In this embodiment, the mean particle diameter of the composite sintered body is preferably not greater than 1.0 µm in the first to fourth alumina-based ceramic compositions described above.

When the mean particle diameter of the composite sintered body is as small as 1.0 µm or below, holes hardly occur in the alumina ceramic composition, sintering shrinkage is improved and the insulator can be made compact. As a result, the composition exhibits the excellent withstand voltage characteristics because the holes that can otherwise operate as the starting point of dielectric breakdown when a high voltage is applied do not exist.

### [Other Features]

This embodiment provides a spark plug S1 using the first to fourth alumina-based ceramic compositions as the insulating material, especially a spark plug S1 using these alumina-based ceramic compositions for the insulator 20.

Consequently, the embodiment provides a novel alumina-based ceramic composition more excellent in withstand voltage characteristics. In other words, the embodiment provide the spark plug S1 exhibiting the excellent withstand voltage characteristics.

This embodiment provides the spark plug S1 comprising the fitting metal 10 having the fitting screw portion 12 on the outer periphery thereof, the insulator 20 fixed inside the fitting metal 10, the center electrode 30 fixed inside the insulator in such a manner that the distal end portion 31 protrudes from the insulator 20, and the ground electrode 40 fixed to the fitting metal 10 and opposing the center electrode 30, through the spark discharge gap 50, between the distal end portion 31 of the center electrode 30, wherein the insulator 20 is constituted from any of the first to fourth alumina-based ceramic compositions and the nominal diameter of the fitting screw portion is not greater than M10.

The embodiment can provide a spark plug S1 which uses the novel alumina-based ceramic composition more excellent in the withstand voltage characteristics and the nominal diameter of the fitting portion 12 of which is reduced in size to not greater than M10.

### EXAMPLES

The present invention will be explained more concretely with reference to the following Examples 1 to 56 and Comparative Example. Note that the invention should not be limited to these examples.

Explaining in advance, Table 1 summarizes a preparation composition (unit: parts by weight), a sintering density (unit: g/cm³) and withstand voltage (unit: kV/mm) for each of Examples 1 to 9. Similarly, Table 2 covers Examples 20 to 38, Table 3 covers Examples 39 to 44 and Table 4 does Examples 45 to 56 and Comparative Example.

### Example 1

A mixed raw material was prepared by dry mixing 100 parts by weight of alumina as the main component having a purity of at least 99.9% and a mean particle diameter of 0.4 µm, 1 parts by weight in total of SiO₂, CaO₃ and MgO that are sintering assistant, and 0.5 parts by weight of Y₂O₃ as the additive composition.

Note that, because CaCO₃ changes to CaO after sintering, the amount of CaCO₃ is represented by parts by weight calculated as CaO. The amounts of SiO₂, CaCO₃ and MgO are 0.86 parts by weight, 0.04 parts by weight and 0.10 parts by weight, respectively, and this proportion is the same in each of the following examples and comparative example.

After the mixed raw material described above was mixed with pure water for 24 hours by using pulverization means such as a ball mill, the mixed raw material was subjected to drying, granulation and press molding to shape it into the form of an insulator of a spark plug.

Sintering was thereafter done in an atmosphere of 1,500 to 1,600°C for 1 to 2 hours to obtain an insulator of a spark plug consisting of an alumina-based ceramic composition having a sintering density of 3.95 g/cm³(relative density 98.5%). Note that this sintering density was substantially equivalent to the sintering density (refer to Comparative Example, described hereinafter) of the insulator in the spark plugs of the prior art, and the insulator was made compact.

The center electrode was inserted into the insulator and then a conductive glass sealant was pressure filled. After pressure was applied thereon by using a stem, the insulator was put inside a furnace for 30 minutes to heat and soften the conductive glass sealant. The stem was quickly pressed. After cooling, a housing having a ground electrode fixed to the outer peripheral surface was fitted and a spark plug was obtained.

Fluorescent X-ray analysis was conducted for the sintered alumina-based ceramic composition. As a result, it was confirmed that the composition value of the preparation composition (see Table 1) by fluorescent X-ray analysis was in agreement with the composition value of the sintered alumina-based ceramic composition.

In other words, this example could provide an alumina-based ceramic composition as a composite sintered body of 100 parts by weight of alumina, 1 part by weight in total of the sintering assistant (SiO₂, CaO, MgO) and 0.5 parts by weight of Y₂O₃ as the additive composition, and a spark plug using this alumina-based ceramic composition as the insulator.

It was also confirmed through X-ray diffraction that alumina as the main component and Y₂O₃ as the additive composition existed as the crystal phase.

The agreement of the composition value of the preparation composition and the composition value of the sintered alumina-based ceramic composition through fluorescent X-ray analysis was similarly confirmed for the following Examples 2 to 56 and the Comparative Example. It was further confirmed that the existence of alumina as the main component and Y₂O₃ as the additive composition in the crystal phase was similarly confirmed in the following Examples 2 to 56.

The withstand voltage was measured in the following manner.

The alumina-based ceramic composition was ground to a thickness of 1.0 ± 0.05 mm by a grinder using diamond abrasives and was actually measured by using a dedicated withstand voltage measuring instrument. In other words, probes pointed into a needle shape were put on upper and lower surfaces of the alumina-based ceramic composition and under this state, an impressed voltage was raised step-wise from 20 kV at a rate of 1 kV/10 seconds while a high voltage generated from a constant voltage power source with an oscillator and a coil was monitored through an oscilloscope.

The voltage at which the sample underwent dielectric breakdown was defined as the withstand voltage of the alumina-based ceramic composition. Incidentally, this method of measuring the withstand voltage held true of the following examples and comparative example. As a result, the withstand voltage of the alumina-based ceramic composition of this example was 40 kV/mm.

### Example 2

A mixed raw material was prepared by using 100 parts by weight of alumina as the main component and 1 part by weight in total of SiO₂, CaCO₃ and MgO as the sintering assistant in the same manner as in Example 1 with the exception that 1.0 part by weight of Y₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 1.0 part by weight of the additive composition Y₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 3

A mixed raw material was prepared by using 100 parts by weight of alumina as the main component and 1 part by weight in total of SiO₂, CaCO₃ and MgO as the sintering assistant in the same manner as in Example 1 with the exception that 2.0 parts by weight of Y₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 2.0 part by weights of the additive composition Y₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 4

A mixed raw material was prepared by using 100 parts by weight of alumina as the main component and 1 part by weight in total of SiO₂, CaCO₃ and MgO as the sintering assistant in the same manner as in Example 1 with the exception that 5.0 parts by weight of Y₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 5.0 parts by weight of the additive composition Y₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 5

A mixed raw material was prepared by using 100 parts by weight of alumina as the main component and 1 part by weight in total of SiO₂, CaCO₃ and MgO as the sintering assistant in the same manner as in Example 1 with the exception that 0.5 parts by weight of Sm₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 0.5 parts by weight of the additive composition Sm₂O₃, and a spark plug using this alumina-based ceramic composition as an insulator, were obtained in this example.

The alumina-based ceramic composition of this example had a sintering density of 3.94 g/cm³ and a withstand voltage of 39 kV/mm.

### Example 6

A mixed raw material was prepared by using 100 parts by weight of alumina as the main component and 1 part by weight in total of SiO₂, CaCO₃ and MgO as the sintering assistant in the same manner as in Example 1 with the exception that 1.0 parts by weight of Sm₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 1.0 parts by weight of the additive composition Sm₂O₃, and a spark plug using this alumina-based ceramic composition as an insulator, were obtained in this example.

The alumina-based ceramic composition of this example had a sintering density of 3.95 g/cm³ and a withstand voltage of 41.5 kV/mm.

### Example 7

A mixed raw material was prepared by using 100 parts by weight of alumina as the main component and 1 part by weight in total of SiO₂, CaCO₃ and MgO as the sintering assistant in the same manner as in Example 1 with the exception that 2.0 parts by weight of Sm₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 2.0 parts by weight of the additive composition Sm₂O₃, and a spark plug using this alumina-based ceramic composition as an insulator, were obtained in this example.

The alumina-based ceramic composition of this example had a sintering density of 3.95 g/cm³ and a withstand voltage of 41.5 kV/mm.

### Example 8

A mixed raw material was prepared by using 100 parts by weight of alumina as the main component and 1 part by weight in total of SiO₂, CaCO₃ and MgO as the sintering assistant in the same manner as in Example 1 with the exception that 5.0 parts by weight of Sm₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 5.0 parts by weight of the additive composition Sm₂O₃, and a spark plug using this alumina-based ceramic composition as an insulator, were obtained in this example.

The alumina-based ceramic composition of this example had a sintering density of 3.95 g/cm³ and a withstand voltage of 41.5 kV/mm.

### Example 9

A mixed raw material was prepared by using 100 parts by weight of alumina as the main component and 1 part by weight in total of SiO₂, CaCO₃ and MgO as the sintering assistant in the same manner as in Example 1 with the exception that 0.5 part by weight of Yb₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 0.5 parts by weight of the additive composition Yb₂O₃, and a spark plug using this alumina-based ceramic composition as an insulator, were obtained in this example.

The alumina-based ceramic composition of this example had a sintering density of 3.94 g/cm³ and a withstand voltage of 39.5 kV/mm.

### Example 10

A mixed raw material was prepared by using 100 parts by weight of alumina as the main component and 1 part by weight in total of SiO₂, CaCO₃ and MgO as the sintering assistant in the same manner as in Example 1 with the exception that 1.0 part by weight of Yb₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 1.0 part by weight of the additive composition Yb₂O₃, and a spark plug using this alumina-based ceramic composition as an insulator, were obtained in this example.

The alumina-based ceramic composition of this example had a sintering density of 3.95 g/cm³ and a withstand voltage of 42.5 kV/mm.

### Example 11

A mixed raw material was prepared by using 100 parts by weight of alumina as the main component and 1 part by weight in total of SiO₂, CaCO₃ and MgO as the sintering assistant in the same manner as in Example 1 with the exception that 2.0 parts by weight of Yb₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 2.0 parts by weight of the additive composition Yb₂O₃, and a spark plug using this alumina-based ceramic composition as an insulator, were obtained in this example.

The alumina-based ceramic composition of this example had a sintering density of 3.95 g/cm³ and a withstand voltage of 42.5 kV/mm.

### Example 12

A mixed raw material was prepared by using 100 parts by weight of alumina as the main component and 1 part by weight in total of SiO₂, CaCO₃ and MgO as the sintering assistant in the same manner as in Example 1 with the exception that 5.0 parts by weight of Yb₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 5.0 parts by weight of the additive composition Yb₂O₃, and a spark plug using this alumina-based ceramic composition as an insulator, were obtained in this example.

The alumina-based ceramic composition of this example had a sintering density of 3.95 g/cm³ and a withstand voltage of 42.5 kV/mm.

### Example 13

A mixed raw material was prepared by using 100 parts by weight of alumina as the main component and 1 part by weight in total of SiO₂, CaCO₃ and MgO as the sintering assistant in the same manner as in Example 1 with the exception that 0.5 parts by weight of Nd₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 0.5 parts by weight of the additive composition Nd₂O₃, and a spark plug using this alumina-based ceramic composition as an insulator, were obtained in this example.

The alumina-based ceramic composition of this example had a sintering density of 3.95 g/cm³ and a withstand voltage of 41 kV/mm.

### Example 14

A mixed raw material was prepared by using 100 parts by weight of alumina as the main component and 1 part by weight in total of SiO₂, CaCO₃ and MgO as the sintering assistant in the same manner as in Example 1 with the exception that 1.0 part by weight of Nd₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 1.0 pars by weight of the additive composition Nd₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 15

A mixed raw material was prepared by using 100 parts by weight of alumina as the main component and 1 part by weight in total of SiO₂, CaCO₃ and MgO as the sintering assistant in the same manner as in Example 1 with the exception that 2.0 parts by weight of Nd₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 2.0 parts by weight of the additive composition Nd₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 16

A mixed raw material was prepared by using 100 parts by weight of alumina as the main component and 1 part by weight in total of SiO₂, CaCO₃ and MgO as the sintering assistant in the same manner as in Example 1 with the exception that 5.0 parts by weight of Nd₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 5.0 parts by weight of the additive composition Nd₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 17

A mixed raw material was prepared by using 100 parts by weight of alumina as the main component and 1 part by weight in total of SiO₂, CaCO₃ and MgO as the sintering assistant in the same manner as in Example 1 with the exception that 0.5 parts by weight of Pr₆O₁₁ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 0.5 parts by weight of the additive composition Pr₆O₁₁, and a spark plug using this alumina-based ceramic composition as an insulator, were obtained in this example.

The alumina-based ceramic composition of this example had a sintering density of 3.95 g/cm³ and a withstand voltage of 42 kV/mm.

### Example 18

A mixed raw material was prepared by using 100 parts by weight of alumina as the main component and 1 part by weight in total of SiO₂, CaCO₃ and MgO as the sintering assistant in the same manner as in Example 1 with the exception that 1.0 part by weight of Pr₆O₁₁ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 1.0 part by weight of the additive composition Pr₆O₁₁, and a spark plug using this alumina-based ceramic composition as an insulator, were obtained in this example.

The alumina-based ceramic composition of this example had a sintering density of 3.95 g/cm³ and a withstand voltage of 44 kV/mm.

### Example 19

A mixed raw material was prepared by using 100 parts by weight of alumina as the main component and 1 part by weight in total of SiO₂, CaCO₃ and MgO as the sintering assistant in the same manner as in Example 1 with the exception that 2.0 parts by weight of Pr₆O₁₁ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 2.0 parts by weight of the additive composition Pr₆O₁₁, and a spark plug using this alumina-based ceramic composition as an insulator, were obtained in this example.

The alumina-based ceramic composition of this example had a sintering density of 3.95 g/cm³ and a withstand voltage of 44 kV/mm.

### Example 20

A mixed raw material was prepared by using 100 parts by weight of alumina as the main component and 1 part by weight in total of SiO₂, CaCO₃ and MgO as the sintering assistant in the same manner as in Example 1 with the exception that 5.0 parts by weight of Pr₆O₁₁ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 5.0 parts by weight of the additive composition Pr₆O₁₁, and a spark plug using this alumina-based ceramic composition as an insulator, were obtained in this example.

The alumina-based ceramic composition of this example had a sintering density of 3.95 g/cm³ and a withstand voltage of 44 kV/mm.

### Example 21

A mixed raw material was prepared by using 100 parts by weight of alumina as the main component and 1 part by weight in total of SiO₂, CaCO₃ and MgO as the sintering assistant in the same manner as in Example 1 with the exception that 0.5 parts by weight of Dy₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 0.5 parts by weight of the additive composition Dy₂O₃, and a spark plug using this alumina-based ceramic composition as an insulator, were obtained in this example.

The alumina-based ceramic composition of this example had a sintering density of 3.95 g/cm³ and a withstand voltage of 40.0 kV/mm.

### Example 22

A mixed raw material was prepared by using 100 parts by weight of alumina as the main component and 1 part by weight in total of SiO₂, CaCO₃ and MgO as the sintering assistant in the same manner as in Example 1 with the exception that 1.0 part by weight of Dy₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 1.0 part by weight of the additive composition Dy₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 23

A mixed raw material was prepared by using 100 parts by weight of alumina as the main component and 1 part by weight in total of SiO₂, CaCO₃ and MgO as the sintering assistant in the same manner as in Example 1 with the exception that 2.0 parts by weight of Dy₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 2.0 parts by weight of the additive composition Dy₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 24

A mixed raw material was prepared by using 100 parts by weight of alumina as the main component and 1 part by weight in total of SiO₂, CaCO₃ and MgO as the sintering assistant in the same manner as in Example 1 with the exception that 5.0 parts by weight of Dy₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 5.0 parts by weight of the additive composition Dy₂O₃, and a spark plug using this alumina-based ceramic composition as an insulator, were obtained in this example.

The alumina-based ceramic composition of this example had a sintering density of 3.94 g/cm³ and a withstand voltage of 43 kV/mm.

### Example 25

A mixed raw material was prepared by using 100 parts by weight of alumina as the main component and 1 part by weight in total of SiO₂, CaCO₃ and MgO as the sintering assistant in the same manner as in Example 1 with the exception that 0.5 parts by weight of Er₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 0.5 parts by weight of the additive composition Er₂O₃, and a spark plug using this alumina-based ceramic composition as an insulator, were obtained in this example.

The alumina-based ceramic composition of this example had a sintering density of 3.95 g/cm³ and a withstand voltage of 40 kV/mm.

### Example 26

A mixed raw material was prepared by using 100 parts by weight of alumina as the main component and 1 part by weight in total of SiO₂, CaCO₃ and MgO as the sintering assistant in the same manner as in Example 1 with the exception that 1.0 part by weight of Er₂O₃ as the additive composition was used.

The procedure of Example 1 was thereafter followed, and an alumin-based ceramic composition as a composite sintered body consisting of 100 parts by weight of alumina, 1 part by weight in total of sintering assistants (SiO₂, CaO, MgO) and 1.0 part by weight of the additive composition Er₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 27

A mixed raw material was prepared by using 100 parts by weight of alumina as the main component and 1 part by weight in total of SiO₂, CaCO₃ and MgO as the sintering assistant in the same manner as in Example 1 with the exception that 2.0 parts by weight of Er₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 2.0 parts by weight of the additive composition Er₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 28

A mixed raw material was prepared by using 100 parts by weight of alumina as the main component and 1 part by weight in total of SiO₂, CaCO₃ and MgO as the sintering assistant in the same manner as in Example 1 with the exception that 5.0 parts by weight of Er₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 5.0 parts by weight of the additive composition Er₂O₃, and a spark plug using this alumina-based ceramic composition as an insulator, were obtained in this example.

The alumina-based ceramic composition of this example had a sintering density of 3.94 g/cm³ and a withstand voltage of 43 kV/mm.

### Example 29

A mixed raw material was prepared by using 100 parts by weight of alumina as the main component and 1 part by weight in total of SiO₂, CaCO₃ and MgO as the sintering assistant in the same manner as in Example 1 with the exception that 0.5 parts by weight of La₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 0.5 parts by weight of the additive composition La₂O₃, and a spark plug using this alumina-based ceramic composition as an insulator, were obtained in this example.

The alumina-based ceramic composition of this example had a sintering density of 3.95 g/cm³ and a withstand voltage of 40 kV/mm.

### Example 30

A mixed raw material was prepared by using 100 parts by weight of alumina as the main component and 1 part by weight in total of SiO₂, CaCO₃ and MgO as the sintering assistant in the same manner as in Example 1 with the exception that 1.0 part by weight of La₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 1.0 part by weight of the additive composition La₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 31

A mixed raw material was prepared by using 100 parts by weight of alumina as the main component and 1 part by weight in total of SiO₂, CaCO₃ and MgO as the sintering assistant in the same manner as in Example 1 with the exception that 2.0 parts by weight of La₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 2.0 parts by weight of the additive composition La₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 32

A mixed raw material was prepared by using 100 parts by weight of alumina as the main component and 1 part by weight in total of SiO₂, CaCO₃ and MgO as the sintering assistant in the same manner as in Example 1 with the exception that 5.0 parts by weight of La₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 5.0 parts by weight of the additive composition La₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 33

A mixed raw material was prepared by using 100 parts by weight of alumina as the main component and 1 part by weight in total of SiO₂, CaCO₃ and MgO as the sintering assistant in the same manner as in Example 1 with the exception that 1.0 part by weight of Eu₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 1.0 parts by weight of the additive composition Eu₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 34

A mixed raw material was prepared by using 100 parts by weight of alumina as the main component and 1 part by weight in total of SiO₂, CaCO₃ and MgO as the sintering assistant in the same manner as in Example 1 with the exception that 1.0 part by weight of Tb₂O₃ as the additive composition was used.

The procedure of Example 1 was thereafter followed, and an alumina-based m ceramic composition as a composite sintered body consisting of 100 parts by weight of alumina, 1 part by weight in total of sintering assistants (SiO₂, CaO, MgO) and 1.0 part by weight of the additive composition Tb₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 35

A mixed raw material was prepared by using 100 parts by weight of alumina as the main component and 1 part by weight in total of SiO₂, CaCO₃ and MgO as the sintering assistant in the same manner as in Example 1 with the exception that 1.0 part by weight of Tm₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 1.0 part by weight of the additive composition Tm₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 36

A mixed raw material was prepared by using 100 parts by weight of alumina as the main component and 1 part by weight in total of SiO₂, CaCO₃ and MgO as the sintering assistant in the same manner as in Example 1 with the exception that 1.0 part by weight of Lu₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 1.0 part by weight of the additive composition Lu₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 37

A mixed raw material was prepared by using 100 parts by weight of alumina as the main component and 1 part by weight in total of SiO₂, CaCO₃ and MgO as the sintering assistant in the same manner as in Example 1 with the exception that 1.0 part by weight of Ho₂O₃ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 1.0 part by weight of the additive composition Ho₂O₃, and a spark plug using this alumina-based ceramic composition as an insulator, were obtained in this example.

The alumina-based ceramic composition of this example had a sintering density of 3.95 g/cm³ and a withstand voltage of 43 kV/mm.

### Example 38

A mixed raw material was prepared by using 100 parts by weight of alumina as the main component and 1 part by weight in total of SiO₂, CaCO₃ and MgO as the sintering assistant in the same manner as in Example 1 with the exception that 1.0 part by weight of CeO₂ as the additive composition was used.

The procedure of Example 1 was thereafter followed, and an alumina-based ceramic composition as a composite sintered body consisting of 100 parts by weight of alumina, 1 part by weight in total of sintering assistants (SiO₂, CaO, MgO) and 1.0 part by weight of the additive composition CeO₂, and a spark plug using this alumina-based ceramic composition as an insulator, were obtained in this example.

The alumina-based ceramic composition of this example had a sintering density of 3.95 g/cm³ and a withstand voltage of 40 kV/mm.

### Comparative Example

In the comparative example shown in Table 4, only 100 parts by weight of alumina as the main component and 1 part by weight in total of SiO₂, CaCO₃ and MgO as the sintering assistant were mixed without containing the additive composition, and a mixed raw material was prepared in the same manner as in Example 1.

The procedure of Example 1 was thereafter followed to obtain an alumina-based ceramic composition as a composite sintered body of 100 parts by weight of alumina and 1 part by weight of sintering assistants (SiO₂, CaO, MgO), and a spark plug using this composition for the insulator. In other words, this comparative example could provide an ordinary spark plug of the prior art.

In the alumina-based ceramic composition of this comparative example, a sintering density was 3.95 g/cm³ and a withstand voltage was 30 kV/mm.

When the comparative example was compared with Examples 1 to 38 described above, it could be understood that the withstand voltage was at least 39 kV/mm in Examples 1 to 38 and the withstand voltage characteristics could be drastically improved in all the Examples 1 to 38 in comparison with the comparative example.

Next, Examples 39 to 44 summarized in Table 3 will be described. These examples employed the "composition of at least one element selected from Al and Y" as the additive composition, or in other words, the second alumina-based ceramic composition described above.

### Example 39

A mixed raw material was prepared by adding 1 part by weight in total of SiO₂, CaCO₃ and MgO as sintering assistants to 100 parts by weight of alumina as the main component having a purity of at least 99.9% and a mean particle diameter of 0.4 µm. This was called "mixed raw material 1".

Next, a raw material was prepared by mixing Al₂O₃ and SiO₂ in a molar ratio of Al₂O₃:SiO₂ = 3:2 and was milled for 1 to 2 hours by using a medium stirring mill to give a mixed raw material. The mean particle diameter of this mixed raw material was set to 0.2 to 0.3 µm.
This mixed material was to become a raw material of 3Al₂O₃·2SiO₂ as the additive composition in the composite sintered body of this example summarized in Table 3, and the mixed raw material for this additive composition was called "mixed raw material 2".

Therefore, in Table 3, the mixed raw material 2 was expressed as a chemical formula of the composition of the crystal phase after sintering. In other words, it was expressed as 3Al₂O₃·2SiO₂ in this example. The parts by weight of the mixed raw material were, as such, the parts by weight of the additive composition. The description of the mixed raw material 2 is true for the following Examples 40 to 44.

The mixed raw material 2 was measured so that it became 1 part by weight with respect to the mixed raw material 1. Mixing was then made with pure water for 24 hours by using pulverization means such as a ball mill to prepare the mixed raw material of the final alumina ceramic composition.

The mixed raw material prepared by mixing the mixed raw material 1 and the mixed raw material 2, that is, the mixed raw material as the raw material of the final composite sintered body, was called "mixed raw material 3". This also held true of the following Examples 40 to 44. The mixed raw material 3 was subjected to drying, granulation and press molding to mold a shape as an insulator of a spark plug.

The insulator was thereafter sintered in an atmosphere of 1,500 to 1,600°C for 1 to 2 hours to obtain an insulator of a spark plug consisting of an alumina-based ceramic composition having a sintering density of 3.95 g/cm³ (relative density 98.5%).

The center electrode was inserted into the insulator and then a conductive glass sealant was pressure filled. After pressure was applied thereon by using a stem, the insulator was put inside a furnace for 30 minutes to heat and soften the conductive glass sealant. The stem was quickly pressed. After cooling, a housing having a ground electrode fixed to the outer peripheral surface was fitted and a spark plug was obtained.

In other words, this example could provide an alumina-based ceramic composition as a composite sintered body of 100 parts by weight of alumina, 1 part by weight in total of the sintering assistant (SiO₂, CaO, MgO) and 1 part by weight of the additive composition 3Al₂O₃·2SiO₂, and a spark plug using this alumina-based ceramic composition as the insulator.

The withstand voltage of the alumina-based ceramic composition of this example was measured in the same manner as in Example 1 and was 43 kV/m.

### Example 40

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that Al₂SiO₅ as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition Al₂SiO₅, and a spark plug using this composition for the insulator.

In the alumina-based ceramic composition of this example, a sintering density was 3.95 g/cm³ and a withstand voltage was 42 kV/mm.

### Example 41

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that MgAl₂O₄ as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition MgAl₂O₄, and a spark plug using this composition for the insulator.

In the alumina-based ceramic composition of this example, a sintering density was 3.95 g/cm³ and a withstand voltage was 40 kV/mm.

### Example 42

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that Al₂O₃·TiO₂ as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition Al₂O₃·TiO₂, and a spark plug using this composition for the insulator.

In the alumina ceramic composition of this example, a sintering density was 3.95 g/cm³ and a withstand voltage was 40 kV/mm.

### Example 43

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that Y₂SiO₅ as the additive composition, was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition Y₂SiO₅, and a spark plug using this composition for the insulator.

In the alumina-based ceramic composition of this example, a sintering density was 3.94 g/cm³ and a withstand voltage was 41 kV/mm.

### Example 44

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that Y₃Al₅O₁₂ as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition Y₃Al₅O₁₂, and a spark plug using this composition for the insulator.

In the alumina-based ceramic composition of this example, a sintering density was 3.95 g/cm³ and a withstand voltage was 41 kV/mm.

When the comparative example described above was compared with Examples 39 to 44 described above, it could be understood that the withstand voltage was 40 kV/mm or above in Examples 39 to 44 and the withstand voltage characteristics could be drastically improved in all the Examples 39 to 44 in comparison with the comparative example.

Next, Examples 45 to 56 summarized in Table 4 will be described. These examples are intended to explain use of the perovskite type oxide ReAlO₃ as the additive composition, or in other words, the third alumina-based ceramic composition described above.

### Example 45

A mixed raw material was prepared by adding 1 part by weight in total of SiO₂, CaCO₃ and MgO as sintering assistants to 100 parts by weight of alumina as the main component having a purity of at least 99.9% and a mean particle diameter of 0.4 µm. This was called "mixed raw material 1".

Next, a raw material was prepared by mixing Al₂O₃ and Y₂O₃ in a molar ratio of Al₂O₃:Y₂O₃ = 1:1 and was milled for 1 to 2 hours by using a medium stirring mill to obtain a mixed raw material. The mean particle diameter of this mixed raw material was set to 0.2 to 0.3 µm. This mixed material was to become a raw material of YAlO₃ as the additive composition in the composite sintered body of the examples summarized in Table 4, and the mixed raw material for this additive composition was called "mixed raw material 2".

Therefore, in Table 4, the mixed raw material 2 was expressed as a chemical formula of the composition of the crystal phase after sintering. In other words, it was expressed as YAlO₃ in this example. The parts by weight of the mixed raw material were, as such, the parts by weight of the additive composition. The description of the mixed raw material 2 is true for the following Examples 46 to 56.

The mixed raw material 2 was measured so that it became 1 part by weight with respect to the mixed raw material 1. Mixing was then done with pure water for 24 hours by using pulverization means such as a ball mill to prepare the mixed raw material of the final alumina ceramic composition.

The mixed raw material prepared by mixing the mixed raw material 1 and the mixed raw material 2, that is, the mixed raw material as the raw material of the final composite sintered body, was called "mixed raw material 3". This is also true for the following Examples 46 to 56. The mixed raw material 3 was subjected to drying, granulation and press molding to mold a shape as an insulator of a spark plug.

The insulator was thereafter sintered in an atmosphere of 1,500 to 1,600°C for 1 to 2 hours to obtain an insulator of a spark plug consisting of an alumina-based ceramic composition having a sintering density of 3.95 g/cm³ (relative density 98.5%).

The center electrode was inserted into the insulator and then a conductive glass sealant was pressure filled. After pressure was applied thereon by using a stem, the insulator was put inside a furnace for 30 minutes to heat and soften the conductive glass sealant. The stem was quickly pressed. After cooling, a housing having a ground electrode fixed to the outer peripheral surface was fitted and a spark plug was obtained.

In other words, this example could provide an alumina-based ceramic composition as a composite sintered body of 100 parts by weight of alumina, 1 part by weight in total of the sintering assistant (SiO₂, CaO, MgO) and 1 part by weight of the additive composition YAlO₃, and a spark plug using this alumina-based ceramic composition as the insulator.

The withstand voltage of the alumina-based ceramic composition of this example was measured in the same manner as in Example 1 and was 44 kV/m.

### Example 46

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that CeAlO₃ as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition CeAlO₃, and a spark plug using this composition for the insulator.

In the alumina-based ceramic composition of this example, a sintering density was 3.95 g/cm³ and a withstand voltage was 40 kV/mm.

### Example 47

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that NdAlO₃ as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition NdAlO₃, and a spark plug using this composition for the insulator.

In the alumina-based ceramic composition of this example, a sintering density was 3.95 g/cm³ and a withstand voltage was 44 kV/mm.

### Example 48

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that PrAlO₃, as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition PrAlO₃, and a spark plug using this composition for the insulator.

In the alumina-based ceramic composition of this example, a sintering density was 3.95 g/cm³ and a withstand voltage was 43 kV/mm.

### Example 49

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that SmAlO₃ as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition SmAlO₃, and a spark plug using this composition for the insulator.

In the alumina-based ceramic composition of this example, a sintering density was 3.94 g/cm³ and a withstand voltage was 43 kV/mm.

### Example 50

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that EuAlO₃ as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition EuAlO₃, and a spark plug using this composition for the insulator.

In the alumina-based ceramic composition of this example, a sintering density was 3.95 g/cm³ and a withstand voltage was 40 kV/mm.

### Example 51

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that GdAlO₃ as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition GdAlO₃, and a spark plug using this composition for the insulator.

In the alumina-based ceramic composition of this example, a sintering density was 3.95 g/cm³ and a withstand voltage was 42 kV/mm.

### Example 52

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that TbAlO₃ as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition TbAlO₃, and a spark plug using this composition for the insulator.

In the alumina-based ceramic composition of this example, a sintering density was 3.95 g/cm³ and a withstand voltage was 43 kV/mm.

### Example 53

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that DyAlO₃ as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition DyAlO₃, and a spark plug using this composition for the insulator.

In the alumina-based ceramic composition of this example, a sintering density was 3.95 g/cm³ and a withstand voltage was 43 kV/mm.

### Example 54

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that HoAlO₃ as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition HoAlO₃, and a spark plug using this composition for the insulator.

In the alumina-based ceramic composition of this example, a sintering density was 3.95 g/cm³ and a withstand voltage was 41 kV/mm.

### Example 55

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that LuAlO₃ as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition LuAlO₃, and a spark plug using this composition for the insulator.

In the alumina-based ceramic composition of this example, a sintering density was 3.95 g/cm³ and a withstand voltage was 42 kV/mm.

### Example 56

A mixed raw material 3 was prepared by preparing the mixed raw material 1 and mixing the mixed raw material 1 and the mixed raw material 2 in the same manner as in Example 39 with the exception that the mixed raw material 2 was prepared in such a manner that LaAlO₃ as the additive composition was 1.0 part by weight.

The procedure of Example 1 was thereafter followed to obtain an alumina-based ceramic composition as a composite sintered body of 100 parts by weight of alumina, 1 part by weight in total of sintering assistants (SiO₂, CaO, MgO) and 1.0 part by weight of the additive composition LaAlO₃, and a spark plug using this composition for the insulator.

In the alumina-based ceramic composition of this example, a sintering density was 3.95 g/cm³ and a withstand voltage was 40 kV/mm.

When the comparative example described above was compared with Examples 45 to 56 described above, it could be understood that the withstand voltage was 40 kV/mm or above in Examples 45 to 56 and for all the example the withstand voltage characteristics could be drastically improved in comparison with the comparative example.

As described above, Examples 1 to 56 can provide a novel alumina-based ceramic composition more excellent in withstand voltage characteristics and a spark plug having excellent withstand voltage characteristics.

**Table 1**

| Example No. | main component Al₂O₃ | sintering assistant | | | additive composition other than sintering assistant | | sintering density | withstand voltage |
|---|---|---|---|---|---|---|---|---|
| | | SiO₂ | CaO | MgO | | | | |
| | (pbw) | (pbw) | (pbw) | (pbw) | (pbw) | | (g/cm³) | (kV/mm) |
| 1 | 100 | 0.86 | 0.04 | 0.10 | Y₂O₃ | 0.5 | 3.95 | 40 |
| 2 | 100 | 0.86 | 0.04 | 0.10 | Y₂O₃ | 1.0 | 3.95 | 43 |
| 3 | 100 | 0.86 | 0.04 | 0.10 | Y₂O₃ | 2.0 | 3.95 | 43 |
| 4 | 100 | 0.86 | 0.04 | 0.10 | Y₂O₃ | 5.0 | 3.95 | 43 |
| 5 | 100 | 0.86 | 0.04 | 0.10 | Sm₂O₃ | 0.5 | 3.94 | 39 |
| 6 | 100 | 0.86 | 0.04 | 0.10 | Sm₂O₃ | 1.0 | 3.95 | 41.5 |
| 7 | 100 | 0.86 | 0.04 | 0.10 | Sm₂O₃ | 2.0 | 3.95 | 41.5 |
| 8 | 100 | 0.86 | 0.04 | 0.10 | Sm₂O₃ | 5.0 | 3.95 | 41.5 |
| 9 | 100 | 0.86 | 0.04 | 0.10 | Yb₂O₃ | 0.5 | 3.94 | 39.5 |
| 10 | 100 | 0.86 | 0.04 | 0.10 | Yb₂O₃ | 1.0 | 3.95 | 42.5 |
| 11 | 100 | 0.86 | 0.04 | 0.10 | Yb₂O₃ | 2.0 | 3.95 | 42.5 |
| 12 | 100 | 0.86 | 0.04 | 0.10 | Yb₂O₃ | 5.0 | 3.95 | 42.5 |
| 13 | 100 | 0.86 | 0.04 | 0.10 | Nd₂O₃ | 0.5 | 3.95 | 41 |
| 14 | 100 | 0.86 | 0.04 | 0.10 | Nd₂O₃ | 1.0 | 3.95 | 43 |
| 15 | 100 | 0.86 | 0.04 | 0.10 | Nd₂O₃ | 2.0 | 3.95 | 43 |
| 16 | 100 | 0.86 | 0.04 | 0.10 | Nd₂O₃ | 5.0 | 3.95 | 43 |
| 17 | 100 | 0.86 | 0.04 | 0.10 | Pr₆O₁₁ | 0.5 | 3.95 | 42 |
| 18 | 100 | 0.86 | 0.04 | 0.10 | Pr₆O₁₁ | 1.0 | 3.95 | 44 |
| 19 | 100 | 0.86 | 0.04 | 0.10 | Pr₆O₁₁ | 2.0 | 3.95 | 44 |

| | | | | | | | | |
|---|---|---|---|---|---|---|---|---|
| pbw: parts by weight | | | | | | | | |

**Table 2**

| Example No. | main component Al₂O₃ | sintering assistant | | | additive composition other than sintering assistant | | sintering density | withstand voltage |
|---|---|---|---|---|---|---|---|---|
| | | SiO₂ | CaO | MgO | | | | |
| | (pbw) | (pbw) | (pbw) | (pbw) | (pbw) | | (g/cm³) | (kV/mm) |
| 20 | 100 | 0.86 | 0.04 | 0.10 | Pr₆O₁₁ | 5.0 | 3.95 | 44 |
| 21 | 100 | 0.86 | 0.04 | 0.10 | Dy₂O₃ | 0.5 | 3.95 | 40 |
| 22 | 100 | 0.86 | 0.04 | 0.10 | Dy₂O₃ | 1.0 | 3.95 | 43 |
| 23 | 100 | 0.86 | 0.04 | 0.10 | Dy₂O₃ | 2.0 | 3.95 | 43 |
| 24 | 100 | 0.86 | 0.04 | 0.10 | Dy₂O₃ | 5.0 | 3.94 | 43 |
| 25 | 100 | 0.86 | 0.04 | 0.10 | Er₂O₃ | 0.5 | 3.95 | 40 |
| 26 | 100 | 0.86 | 0.04 | 0.10 | Er₂O₃ | 1.0 | 3.95 | 43 |
| 27 | 100 | 0.86 | 0.04 | 0.10 | Er₂O₃ | 2.0 | 3.95 | 43 |
| 28 | 100 | 0.86 | 0.04 | 0.10 | Er₂O₃ | 5.0 | 3.94 | 43 |
| 29 | 100 | 0.86 | 0.04 | 0.10 | La₂O₃ | 0.5 | 3.95 | 40 |
| 30 | 100 | 0.86 | 0.04 | 0.10 | La₂O₃ | 1.0 | 3.95 | 43 |
| 31 | 100 | 0.86 | 0.04 | 0.10 | La₂O₃ | 2.0 | 3.95 | 43 |
| 32 | 100 | 0.86 | 0.04 | 0.10 | La₂O₃ | 5.0 | 3.95 | 43 |
| 33 | 100 | 0.86 | 0.04 | 0.10 | Eu₂O₃ | 1.0 | 3.95 | 43 |
| 34 | 100 | 0.86 | 0.04 | 0.10 | Tb₂O₃ | 1.0 | 3.95 | 43 |
| 35 | 100 | 0.86 | 0.04 | 0.10 | Tm₂O₃ | 1.0 | 3.95 | 43 |
| 36 | 100 | 0.86 | 0.04 | 0.10 | Lu₂O₃ | 1.0 | 3.95 | 43 |
| 37 | 100 | 0.86 | 0.04 | 0.10 | HO₂O₃ | 1.0 | 3.95 | 43 |
| 38 | 100 | 0.86 | 0.04 | 0.10 | CeO₂ | 1.0 | 3.95 | 40 |

| | | | | | | | | |
|---|---|---|---|---|---|---|---|---|
| pbw: parts by weight | | | | | | | | |

**Table 3**

| Example No. | main component Al₂O₃ | sintering assistant | | | additive composition other than sintering assistant | | sintering density | withstand voltage |
|---|---|---|---|---|---|---|---|---|
| | | SiO₂ | CaO | MgO | | | | |
| | (pbw) | (pbw) | (pbw) | (pbw) | (pbw) | | (g/cm³) | (kV/mm) |
| 39 | 100 | 0.86 | 0.04 | 0.10 | 3Al₂O₃ · 2SiO₂ | 1.0 | 3.95 | 43 |
| 40 | 100 | 0.86 | 0.04 | 0.10 | Al₂SiO₅ | 1.0 | 3.95 | 42 |
| 41 | 100 | 0.86 | 0.04 | 0.10 | MgAl₂O₄ | 1.0 | 3.95 | 40 |
| 42 | 100 | 0.86 | 0.04 | 0.10 | Al₂O₃· TiO₂ | 1.0 | 3.95 | 40 |
| 43 | 100 | 0.86 | 0.04 | 0.10 | YSiO₅ | 1.0 | 3.94 | 41 |
| 44 | 100 | 0.86 | 0.04 | 0.10 | Y₃Al₅O₁₂ | 1.0 | 3.95 | 41 |

| | | | | | | | | |
|---|---|---|---|---|---|---|---|---|
| pbw: parts by weight | | | | | | | | |

**Table 4**

| Example No. | main component Al₂O₃ | sintering assistant | | | additive composition other than sintering assistant | | sintering density | withstand voltage |
|---|---|---|---|---|---|---|---|---|
| | | SiO₂ | CaO | MgO | | | | |
| | (pbw) | (pbw) | (pbw) | (pbw) | (pbw) | | (g/cm³) | (kV/mm) |
| 45 | 100 | 0.86 | 0.04 | 0.10 | YAlO₃ | 1.0 | 3.95 | 44 |
| 46 | 100 | 0.86 | 0.04 | 0.10 | CeAlO₃ | 1.0 | 3.95 | 40 |
| 47 | 100 | 0.86 | 0.04 | 0.10 | NdAlO₃ | 1.0 | 3.95 | 44 |
| 48 | 100 | 0.86 | 0.04 | 0.10 | PrAlO₃ | 1.0 | 3.95 | 43 |
| 49 | 100 | 0.86 | 0.04 | 0.10 | SmAlO₃ | 1.0 | 3.94 | 43 |
| 50 | 100 | 0.86 | 0.04 | 0.10 | EuAlO₃ | 1.0 | 3.95 | 40 |
| 51 | 100 | 0.86 | 0.04 | 0.10 | GdAlO₃ | 1.0 | 3.95 | 42 |
| 52 | 100 | 0.86 | 0.04 | 0.10 | TbAlO₃ | 1.0 | 3.95 | 43 |
| 53 | 100 | 0.86 | 0.04 | 0.10 | DyAlO₃ | 1.0 | 3.94 | 43 |
| 54 | 100 | 0.86 | 0.04 | 0.10 | HoAlO₃ | 1.0 | 3.95 | 41 |
| 55 | 100 | 0.86 | 0.04 | 0.10 | LuAlO₃ | 1.0 | 3.95 | 42 |
| 56 | 100 | 0.86 | 0.04 | 0.10 | LaAlO₃ | 1.0 | 3.95 | 40 |
| Comparative Example | 100 | 0.86 | 0.04 | 0.10 | - | | 3.95 | 30 |

| | | | | | | | | |
|---|---|---|---|---|---|---|---|---|
| pbw: parts by weight | | | | | | | | |

## Claims

1. An alumina-based ceramic composition containing alumina as a main component, comprising a composite sintered body of alumina as said main component and a composition of at least one element selected from Al, Si, Mg and rare earth elements, wherein:
an amount of said composition of at least one element selected from Al, Si, Mg and the rare earth elements is not greater than 5 parts by weight on the basis of 100 parts by weight of alumina as said main component.

2. An alumina-based ceramic composition according to claim 1, wherein said rare earth element is at least one element selected from the group consisting of La, Ce, Pr, Nd, Sm, Eu, Gd, Tb, Dy, Ho, Er, Tm, Yb, Lu and Y.

3. An alumina-based ceramic composition according to claim 1, wherein said composition of said rare earth element is at least one composition selected from La₂O₃, CeO₂, Ce₂O₃, Pr₂O₃, Pr₆O₁₁, Nd₂O₃, Sm₂O₃, Eu₂O₃, Gd₂O₃, Tb₂O₃, Tb₄O₇, Dy₂O₃, Ho₂O₃, Er₂O₃, Tm₂O₃, Yb₂O₃, Lu₂O₃ and Y₂O₃.

4. An alumina-based ceramic composition containing alumina as a main component, comprising a composite sintered body of alumina as said main component and a composition of at least one element selected from Al and Y, wherein:
an amount of said composition of at least one element selected from Al and Y is not greater than 5 parts by weight on the basis of 100 parts by weight of alumina as said main component.

5. An alumina-based ceramic composition according to claim 4, wherein said composition of at least one element selected from Al and Y is at least one composition selected from Al₂SiO₅, MgAl₂O₄, Al₂O₃·TiO₂, 3Al₂O₃·2SiO₂, YAlO₃, Y₃Al₅O₁₂, Y₂SiO₅ and Al₂O₃.

6. An alumina-based ceramic composition containing alumina as a main component, comprising a composite sintered body of alumina as said main component and a perovskite type oxide ReAlO₃ as a composite oxide of a rare earth element Re and Al, wherein:
an amount of said perovskit type oxide ReAlO₃ is not greater than 5 parts by weight on the basis of 100 parts by weight of alumina as said main component.

7. An alumina-based ceramic composition according to claim 6, wherein said composite sintered body comprises a composition of at least one element selected from Al and Y, in addition to alumina as said main component and said perovskite type oxide ReAlO₃, and a total amount of said perovskite type oxide ReAlO₃ and said composition of at least one element selected from Al and Y is not greater than 5 parts by weight on the basis of 100 parts by weight of alumina as said main component.

8. An alumina-based ceramic composition according to claim 7, wherein said composition of at least one element selected from Al and Y is at least one composition selected from Al₂SiO₅, MgAl₂O₄, Al₂O₃·TiO₂, 3Al₂O₃·2SiO₂, YAlO₃, Y₃Al₅O₁₂, Y₂SiO₅ and Al₂O₃.

9. An alumina-based ceramic composition according to claim 6, wherein said perovskite type oxide ReAlO₃ is at least one composition selected from LaAlO₃, CeAlO₃, PrAlO₃, NdAlO₃, SmAlO₃, EuAlO₃, GdAlO₃, TbAlO₃, DyAlO₃, HoAlO₃, ErAlO₃, TmAlO₃, YbAlO₃, LuAlO₃ and YAlO₃.

10. An alumina-based ceramic composition according to claim 1, wherein a mean particle diameter of said composite sintered body is not greater than 1.0 µm.

11. A spark plug using the alumina ceramic composition according to any one of claims 1 to 10 as an insulating material.

12. A spark plug comprising:
a fitting metal (10) having a fitting screw portion (12) formed round an outer periphery thereof;
an insulator (20) fixed inside said fitting metal (10);
a center electrode (30) fixed inside said insulator (20) in such a manner that a distal end portion (31) thereof protrudes from said insulator (20); and
a ground electrode (40) fixed to said fitting metal (10) and opposing said center electrode (30), through a spark discharge gap (50), between the distal end portion (31) of said center electrode (30) and said ground electrode (40); wherein:
said insulator (20) comprises said alumina ceramic composition according to any one of claims 1 to 10; and
a nominal diameter of said fitting screw portion (12) is not greater than M10.
